# FASCICULE DE BREVET EUROPEEN

(11) **EP 1 156 017 B1**
(45) Date de publication et mention de la délivrance du brevet: **23.03.2005**
(21) Numéro de dépôt: 01401263.7
(22) Date de dépôt: 16.05.2001
(51) Int. Cl.: C03B 35/08

(54) **Roue de transfert pour procédé et dispositif de fabrication d'articles en matière thermoplastique**
Transfertrad zum Verfahren und Vorrichtung zum Herstellen von Gegenständen aus thermoplastischen Materialen
Transfer wheel for method and apparatus for making thermoplastic articles

(30) Priorité: 18.05.2000 FR 0006400
(43) Date de publication de la demande: 21.11.2001
(73) Titulaire: SAINT-GOBAIN EMBALLAGE, 92400 Courbevoie (FR)
(72) Inventeur: Gallo, Enrico, 71100 Chalon sur Saone (FR); Mainet, Gerard, 71100 Chalon sur Saone (FR)
(74) Mandataire: Muller, René

(56) Documents cités:
- DE-A- 2 002 150
- US-A- 4 411 353

## Description

La présente invention est relative à la fabrication d'articles en matière thermoplastique, notamment des produits verriers creux tels que bouteilles, flacons, pots...
Les procédés classiques employés à l'heure actuelle por fabriquer les bouteilles, par exemple, mettent en oeuvre des machines dites IS et sont connus sous les désignations de procédés « soufflé-soufflé » et « pressé-soufflé ».

Ces procédés peuvent être décomposés en plusieurs étapes. On décrit, ci-après, le procédé « soufflé-soufflé » qui est le plus répandu :
- *le chargement* : une goutte de verre ou paraison entre sous l'effet de son propre poids dans un premier moule (ébaucheur), par l'extrémité supérieure de celui-ci, correspondant au fond de la bouteille ;
- *la compression* : après le chargement, un fond ébaucheur vient fermer le moule ébaucheur ; puis on effectue un soufflage d'air comprimé dans le moule ébaucheur par l'intermédiaire du fond ébaucheur pour forcer le verre à bien pénétrer dans la partie inférieure du moule, qui correspond à la bague du futur article ; de plus cette compression assure un bon contact thermique entre le verre et le moule ;
- *le perçage* : un poinçon, de dimensions réduites, occupant approximativement la hauteur de la bague et fermant le bas du moule ébaucheur, se retire vers le bas, laissant place à une alimentation en air comprimé qui chasse devant lui le verre chaud moins visqueux situé au voisinage de l'axe du moule ébaucheur, le verre froid plus visqueux qui a été refroidi au contact du moule restant, quant à lui, en place ; une ébauche du futur article est ainsi obtenue ;
- *le transfert* : lorsque l'ébauche s'est suffisamment refroidie dans le moule ébaucheur pour pouvoir être manipulée, elle est transférée dans un second moule (finisseur) qui a la forme de l'article final ;
- *l'allongement et le soufflage* : une fois placée dans le moule finisseur, on laisse l'ébauche s'allonger un certain temps avant de la souffler pour lui donner la forme de l'article ; cette étape d'allongement permet de bien répartir le verre dans tout l'article ;
- *l'extraction* : au contact du moule finisseur, le verre se refroidit rapidement, et quand sa viscosité est suffisamment basse, l'article est extrait du moule finisseur.

Le procédé « pressé-soufflé » ne diffère quant à lui du procédé « soufflé-soufflé » que dans la phase de formage de l'ébauche, qui est obtenue par le pressage du verre dans le moule ébaucheur fermé, au moyen d'un poinçon plus ou moins long qui pénètre dans le moule par le bas de celui-ci à travers le moule de bague. Il n'y a donc pas d'étapes de compression ni de perçage, l'ébauche de l'article étant formée en une seule fois par ce pressage.

Ces procédés permettent de fabriquer toutes les formes d'articles qu'elles soient axisymétriques ou non. Le dispositif mis en oeuvre comme indiqué ci-dessus ne constitue qu'une section d'une machine IS qui en comporte plusieurs. La forme des articles produits est déterminée par celle des cavités des moules finisseurs de la machine IS.

D'autre part, une fois extraits de leurs moules, les articles sont soumis à des opérations de transfert ; au cours de certaines phases de ces opérations les articles entrent tous successivement en contact avec des moyens de guidage, dont la fonction est notamment de modifier la direction de déplacement des articles.

Dans les procédés du type décrit précédemment, des moyens de contrôle tels que, dans le cas par exemple d'une fabrication de bouteilles, flacons ou pots en verre, contrôle de résistance latérale, contrôles dimensionnels, détection des glaçures et éventuellement vérification de la planéité des bagues, sont disposés en aval du dispositif de fabrication, c'est à dire après que les articles aient été refroidis de manière contrôlée dans l'arche de recuisson puis qu'ils aient été soumis , le cas échéant, à un traitement lubrifiant sur une table d'accumulation. Des articles défectueux sont rejetés.

Dans certains cas, les défauts détectés sur un article résultent d'un défaut du moyen de guidage avec lequel l'article a été en contact, dans d'autres cas ils résultent de l'endommagement de la cavité (ou empreinte), ou même d'autres parties de l'un ou de plusieurs des moules finisseurs, voire des moules ébaucheurs. A l'évidence il s'avère de la plus haute importance de pouvoir déterminer de manière simple en bout de chaîne de fabrication, et notamment en ce qui concerne un article défectueux, de quel moule il provient et avec quel moyen de guidage il a été en contact , afin bien entendu de déterminer l'élément responsable (moule, moyen de guidage...) en vue de son remplacement et de sa restauration ou de sa mise au rebut définitive. Les inventeurs ont précisément élaboré un nouveau procédé dans lequel la traçabilité de l'article fabriqué est considérablement améliorée, et qui est compatible avec une production à l'échelle industrielle.

L'invention a donc pour but la mise à disposition d'un procédé de fabrication d'articles en matière thermoplastique comprenant :
- la mise d'une quantité de ladite matière à une température en permettant la déformation thermoplastique,
- la division de ladite quantité en plusieurs paraisons,
- l'introduction de ces paraisons dans autant de cavités,
- le moulage des paraisons,
- le transfert des articles ainsi obtenus, comprenant une phase de contact mécanique de chaque article avec un moyen de guidage,
dans lequel la traçabilité de chaque article fabriqué soit maximale, c'est à dire dans lequel il soit aisé de déterminer quels éléments et parties du dispositif de fabrication ont été actifs dans la fabrication de cet article particulier.

Les inventeurs ont atteint ce but par le fait que, dans un procédé tel que décrit ci-dessus, lesdits moyens de guidage sont dénombrables et leur nombre total est égal au nombre total desdites cavités. Ainsi devient-il plus facile de s'assurer que tous les articles provenant d'une cavité, ou d'une section de la machine IS déterminée, seront guidés par un unique moyen de guidage. Dans cette mesure, quand un article défectueux est détecté, seule la connaissance de sa cavité associée, ou de son moyen de guidage associé suffit pour qu'une investigation sur l'origine du défaut puisse être menée en examinant les deux éléments, puisqu'alors l'identification de l'un entraîne celle de l'autre.

Selon un mode de réalisation mettant à profit les caractéristiques de l'invention de manière particulièrement avantageuse, lesdites cavités ne sont pas toutes de formes identiques. En d'autres termes tous les articles produits au cours d'un cycle n'ont pas tous la même forme ; des moules ébaucheurs et finisseurs de sections différentes d'une machine IS peuvent, le cas échéant, avoir des empreintes de formes différentes. Du fait que, conformément à l'invention, l'article provenant d'une cavité déterminée est susceptible de n'entrer en contact qu'avec un unique moyen de guidage, la surface de contact de ce dernier est alors avantageusement adaptée à celle de cet article.

Cependant, d'autres modes de réalisation dans lesquels lesdites cavités sont toutes de formes identiques ne sont pas pour autant exclus de l'invention.

Conformément à une variante privilégiée de l'invention, comme expliqué ci-dessus, les articles faisant l'objet du procédé de fabrication sont des produits verriers creux tels que bouteilles, flacons, pots...

Dans cette dernière variante, lesdits moyens de guidage sont de préférence les doigts de poussée d'une roue de transfert. Une telle roue de transfert est habituellement positionnée dans la ligne de fabrication de produits verriers creux en aval du tunnel de traitement à chaud, dans lequel des oxydes métalliques d'étain ou de titane ou d'autres métaux sont déposés sur les produits verriers à une température approximative de 500°C pour en renforcer la surface. La roue de transfert est positionnée en amont de la barre de transfert précédant l'arche de recuisson dans laquelle les produits sont refroidis lentement, de manière contrôlée.

En conséquence, d'autres objets de l'invention sont :
- une roue de transfert (1) comprenant des doigts de poussée (7) pour le guidage d'articles (8, 9) mis en forme finale ou quasi finale dans des cavités, caractérisée en ce que le nombre total des doigts de poussée (7) est égal au nombre total desdites cavités ; et
- un dispositif de fabrication d'articles (8, 9) comprenant des cavités de mise en forme finale ou quasi finale desdits articles (8, 9), et une roue de transfert (1) comprenant des doigts de poussée (7) pour le guidage desdits articles (8, 9), caractérisé en ce que le nombre total des doigts de poussée (7) est égal au nombre total desdites cavités.

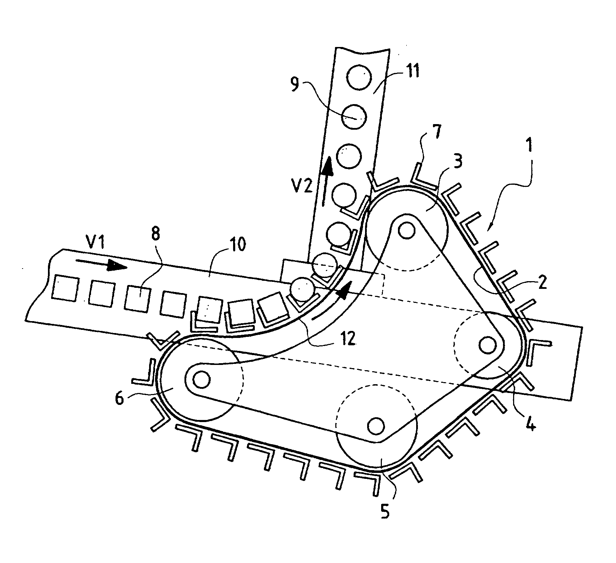

Par ailleurs, le fonctionnement de la roue de transfert est expliqué ci-dessous en référence à la figure unique annexée, qui est une vue schématique de dessus d'une roue de transfert.

La roue de transfert 1 comprend une bande continue 2 mobile autour de quatre rouleaux 3, 4, 5 et 6. Des doigts de poussée 7 sont répartis à intervalles réguliers sur une partie au moins, en l'occurrence sur la totalité de la longueur de la bande 2, de laquelle ils sont solidaires.

La roue de transfert 1 appartient à une installation pour la fabrication de produits verriers creux de deux types différents, présentant des formes extérieures différentes, les produits 8 et les produits 9 symbolisés respectivement par des sections sensiblement carrées et par des sections sensiblement circulaires.

Les produits 8,9 approchent en premier lieu une partie concave 12 de la bande continue 2 selon le mouvement de translation rectiligne à une vitesse v1 d'une bande transporteuse 10 qui les supporte. Ils entrent ensuite en contact avec des doigts de poussée 7 positionnés le long de la partie concave 12.

Ces doigts de poussée 7 constituent des moyens de guidage qui dévient les produits 8,9 en un mouvement de translation rectiligne à une vitesse v2 d'une bande transporteuse 11, de direction perpendiculaire à celle du mouvement de la bande transporteuse 10. Fréquemment, et bien que cela n'apparaisse pas sur le dessin, la vitesse v1 est supérieure à la vitesse v2, de sorte que l'espacement des produits 8, 9 sur la bande 10 est supérieur à cet espacement sur la bande 11.

Conformément à l'invention, le nombre total de doigts de poussée 7 est égal au nombre total de paraisons mises en forme en un cycle de fabrication, c'est à dire par exemple au nombre de sections de la machine IS utilisée. Ainsi, et bien que la figure représente tous les doigts de poussée de formes sensiblement identiques, ces formes seront dans la réalité avantageusement adaptées à celles des produits 8 ou 9 selon le cas, dans la mesure où, comme expliqué ci-dessus, un doigt de poussée déterminé sert de moyen de guidage pour tous les produits formés dans une unique cavité ou une unique section de la machine IS.

Ce type de roue de transfert permet avantageusement de déposer les articles sur le convoyeur de façade d'arche de recuisson alignés sur leur génératrice du côté opposé à l'arche (c'est-à-dire du côté du stacker). Cette particularité est surtout importante dans le cas d'articles de diamètres différents et permet ainsi à la barre de poussée du stacker d'entrer en contact avec tous les articles en même temps.

Les opérations consistant à détecter et remplacer les doigts de poussée ou les moules défectueux peuvent être effectuées plus facilement et plus rapidement; il en résulte un gain de productivité, notamment dans la fabrication d'articles creux en verre.

## Revendications

1. Procédé de fabrication d'articles (8, 9) en matière thermoplastique comprenant :
- la mise d'une quantité de ladite matière à une température en permettant la déformation thermoplastique,
- la division de ladite quantité en plusieurs paraisons,
- l'introduction de ces paraisons dans autant de cavités,
- le moulage des paraisons,
- le transfert des articles (8, 9) ainsi obtenus, comprenant une phase de contact mécanique de chaque article avec un moyen de guidage (7),
**caractérisé en ce que** lesdits moyens de guidage (7) sont dénombrables et **en ce que** leur nombre total est égal au nombre total desdites cavités.

2. Procédé selon la revendication 1, **caractérisé en ce que** lesdites cavités ne sont pas toutes de formes identiques.

3. Procédé selon la revendication 1 ou 2, **caractérisé en ce que** lesdits articles (8,9) sont des produits verriers creux.

4. Procédé selon la revendication 3, **caractérisé en ce que** lesdits moyens de guidage sont les doigts de poussée (7) d'une roue de transfert (1).

5. Roue de transfert (1) comprenant des doigts de poussée (7) pour le guidage d'articles (8, 9) mis en forme finale ou quasi finale dans des cavités, **caractérisée en ce que** le nombre total des doigts de poussée (7) est égal au nombre total desdites cavités.

6. Dispositif de fabrication d'articles (8, 9) comprenant des cavités de mise en forme finale ou quasi finale desdits articles (8, 9), et une roue de transfert (1) comprenant des doigts de poussée (7) pour le guidage desdits articles (8, 9), **caractérisé en ce que** le nombre total des doigts de poussée (7) est égal au nombre total desdites cavités.

## Claims

1. Method of manufacturing articles (8, 9) made from thermoplastic material, comprising:
- raising a quantity of the said material to a temperature allowing its plastic deformation,
- dividing the said quantity into several parisons,
- introducing these parisons into the same number of cavities,
- moulding the parisons,
- transferring the articles (8, 9) thus obtained, comprising a phase of mechanical contact of each article with a guide means (7),
**characterised in that** the said guide means (7) are countable and **in that** their total number is equal to the total number of the said cavities.

2. Method according to Claim 1, **characterised in that** the said cavities do not all have identical shapes.

3. Method according to Claim 1 or 2, **characterised in that** the said articles (8, 9) are hollow glass products.

4. Method according to Claim 3, **characterised in that** the said guide means are fingers (7) for pushing a transfer wheel (1).

5. Transfer wheel (1) comprising pushing fingers (7) for the guidance of articles (8, 9) put in final or almost final form in cavities, **characterised in that** the total number of the pushing fingers (7) is equal to the total number of the said cavities.

6. Device for manufacturing articles (8, 9), comprising cavities for the final or almost final forming of the said articles (8, 9), and a transfer wheel (1) comprising pushing fingers (7) for guiding the said articles (8, 9), **characterised in that** the total number of pushing fingers (7) is equal to the total number of the said cavities.

## Patentansprüche

1. Verfahren zur Herstellung von Erzeugnissen (8, 9) aus warmeformbarem Material, welches das
- Erwärmen einer Menge dieses Materials auf eine Temperatur, die dessen thermoplastische Verformung erlaubt,
- Aufteilen dieser Menge in mehrere Vorformlinge,
- Füllen der Vorformlinge in genauso viele Hohlräume,
- Formgeben der Vorformlinge und
- Übergeben der so erhaltenen Erzeugnisse (8, 9), das eine Phase des mechanischen Kontakts eines jeden Erzeugnisses mit einem Führungsmittel (7) einschließt, umfasst,
**dadurch gekennzeichnet, dass** die Führungsmittel (7) abzählbar sind, und **dass** ihre Gesamtzahl gleich der Gesamtzahl der Hohlräume ist.

2. Verfahren nach Anspruch 1, **dadurch gekennzeichnet, dass** nicht alle Hohlräume eine identische Form haben.

3. Verfahren nach Anspruch 1 oder 2, **dadurch gekennzeichnet, dass** die Erzeugnisse (8, 9) Hohlglaserzeugnisse sind.

4. Verfahren nach Anspruch 3, **dadurch gekennzeichnet, dass** die Führungsmittel die Schubfinger (7) eines Übergaberades (1) sind.

5. Übergaberad (1), das Schubfinger (7) für die Führung von Erzeugnissen (8, 9), denen in den Hohlräumen die endgültige oder fast endgültige Form verliehen worden ist, umfasst, **dadurch gekennzeichnet, dass** die Gesamtzahl der Schubfinger (7) gleich der Gesamtzahl der Hohlräume ist.

6. Vorrichtung zur Herstellung von Erzeugnissen (8, 9), die Hohlräume für die endgültige oder fast endgültige Formgebung der Erzeugnisse (8, 9) und ein Übergaberad (1) umfasst, das Schubfinger (7) für die Führung dieser Erzeugnisse (8, 9) enthält, **dadurch gekennzeichnet, dass** die Gesamtzahl der Schubfinger (7) gleich der Gesamtzahl der Hohlräume ist.
